# EUROPEAN PATENT SPECIFICATION

(11) **EP 0 905 014 B1**
(45) Date of publication and mention of the grant of the patent: **02.06.2004**
(21) Application number: 98115626.8
(22) Date of filing: 19.08.1998
(51) Int. Cl.: B62M 23/02

(54) **Motor-assisted bicycle**
Motorangetriebenes Fahrrad
Bicyclette à moteur

(30) Priority: 30.09.1997 JP 26753597
(43) Date of publication of application: 31.03.1999
(73) Proprietor: Honda Giken Kogyo Kabushiki Kaisha, Minato-ku, Tokyo (JP)
(72) Inventor: Iseno, Mitsuru, 4-1 Chuo 1-chome Wako-shi, Saitama (JP); Yamaguchi, Masaaki, 4-1 Chuo 1-chome Wako-shi, Saitama (JP)
(74) Representative: Liska, Horst, Dr.-Ing.

(56) References cited:
- GB-A- 2 050 270
- GB-A- 2 270 053

## Description

The present application invention relates to a motor-assisted bicycle according to the preamble of claim 1.

According to a conventional motor-assisted bicycle, a battery for power source is stored attachably and detachably in a battery case addingly installed on the rear side of a seat tube which is a member of the body frame (refer to Japanese Unexamined Patent Publication No. Hei 6-237535).

According to the motor-assisted bicycle described in the publication, the battery case for storing a battery for power source is constituted separately from the body frame and therefore, space is needed for installing the battery case, the body is large-sized by that amount, the weight is increased. Therefore, it is difficult to reduce the size, wight and cost.

GB 2 270 053 A discloses a motor-assisted bicycle in accordance with the preamble of claim 1. There, the battery is mounted in a separate case above the rear wheel. GB 2 050 270 A discloses a non-foldable electric bicycle with batteries stored within the frame tubes thereof.

It is an object of the invention to provide a motor-assisted bicycle of the generic type overcoming the above difficulty.

The object is achieved by a motor-assisted bicycle in accordance with claim 1.

The frame is used for a portion of storing the battery and accordingly, special space and a battery case for storing the battery become unnecessary and size and weight reduction of the body and the reduction in cost can be achieved.

The frame is made hollow and the thickness is thickened to a degree capable of storing the battery and therefore, even when the wall thickness of the frame is thinned, the bending rigidity and the bending strength can be maintained at sufficiently high levels and an increase in the weight of the body in view thereof can be avoided.

The battery can be put into the frame from the opening of the frame or can be taken out from inside of the frame via the opening and therefore, attachment and detachment of the battery can be carried out simply and easily.

Further, by constituting the invention as described in claim 2, even in a state where the frame is folded, the opening of the frame is closed by the lid. The lid prevents the battery from dropping off and protect the opening from foreign objects.

Furthermore, the lid is lockable and accordingly the lid is locked in the state of closing the lid and robbery or roguery of the battery in the frame can firmly be prevented.

Further, by constituting the invention as described in claim 3, a structure of folding the frame and a structure of opening or closing the lid can be simplified, the number of parts can be reduced and reduction in cost can be achieved.

Further, by constituting the invention as described in claim 4, in a folded state of the frame, the chain is sandwiched by the folded frame and is protected from stains or damages and the frame can simply be folded without being removed from a sprocket.

Further, by constituting the invention as described in claim 5, a rear frame can stand self-supportedly by the rear frame and the stand which is convenient in storage and conveyance of the bicycle to a garage or the like in the folded state and further, storing and taking a battery becomes convenient.

An explanation will be given of an embodiment of the present application invention illustrated by drawings.
Fig. 1 is a side view of a motor-assisted bicycle having a battery storing device according to the present application invention.
Fig. 2 is a disassembled perspective view of Fig. 1.
Fig. 3 is a longitudinal sectional side view enlarging essential portions of Fig. 1.
Fig. 4 is a plane view of Fig. 3.
Fig. 5 is a partially cut plane view of a state where the bicycle is assembled.
Fig. 6 is a partially cut plane view of a state where a wedged lever is pivoted forwardly.
Fig. 7 is a partially cut plane view of a state where the bicycle is folded.
Fig. 8 is a side view of essential portions in a state where a front frame 3 and a rear frame 4 are solidly coupled by pivoting a wedged lever rearwardly.
Fig. 9 is a side view of essential portions in a state where coupling of the front frame 3 and rear frame 4 is slackened by pivoting the wedged lever forwardly.
Fig. 10 is a longitudinal sectional view which is partially cut along a line X-X of Fig. 5.
Fig. 11 is a sectional front view which is cut along a line XI-XI of Fig. 3.
Fig. 12 is a side view of a wedged lever.
Fig. 13 is a cross-sectional view which is cut along a line XIII-XIII of Fig. 12.
Fig. 14 is a partially cut side view of a battery unit case.
Fig. 15 is a plane view of Fig. 14.
Fig. 16 illustrates end views of Fig. 14.
Fig. 17 is a perspective view of a rear portion of a battery unit case and a battery holding member.
Fig. 18 is a side view of a state where the motor-assisted bicycle is folded.

A main frame 2 of a motor-assisted bicycle 1 is hollow, the main frame 2 is constituted by a front frame 3 having a cross-sectional shape in a rhombic shape where corners are rounded and a rear frame 4 having a cross-sectional shape of a rectangular shape where corners are rounded and the front end of the front frame 3 is welded integrally to a head pipe 5.

Further, a coupling flange 6 made by die-cast of a light alloy of an aluminum alloy or the like is integrally welded to the rear end of the front frame 3, a hinge center 7 is integrally formed on the right side of the coupling flange 6 in respect of the body and a coupling bolt engaging notch 8 is integrally formed on the left side of the coupling flange 6 in respect of the body.

Further, the rear frame 4 is constituted by a connecting piece 9 made by die-cast of a light alloy at its front end portion, a pair of left and right side plates 10 made by sheet drawing and covers 11 made by sheet drawing covering rear portions of the side plates 10 and a bottom plate 12 made by sheet drawing integrally bonded to lower inner faces of the side plates 10, mutually bonding portions of these are integrally bonded by welding, upper and lower hinges 13 are integrally formed on the right side of the connecting piece 9 to sandwich from above and from below the hinge center 7 at the coupling flange 6 of the front frame 3 and a lever pivot supporting portion 15 capable of supporting a base 14a of a wedged lever 14 is integrally formed on the left side of the connecting piece 9 in respect of the body.

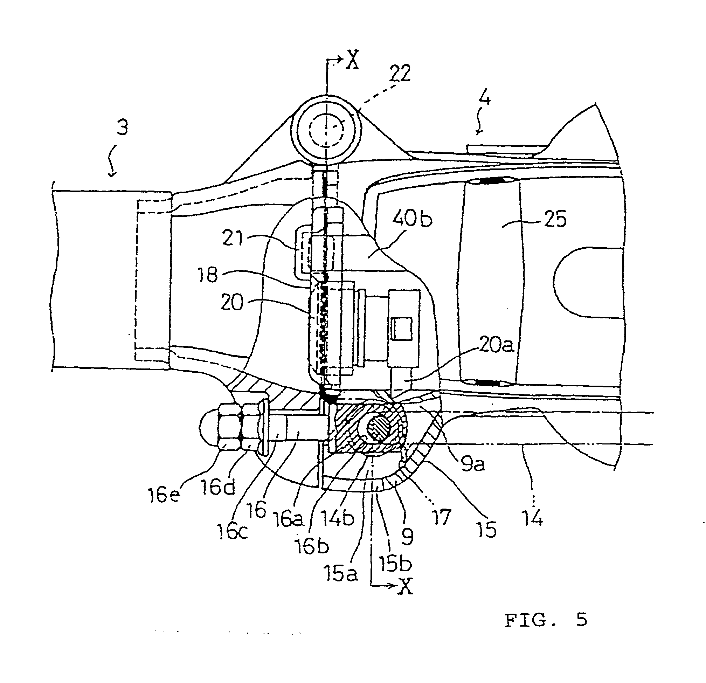

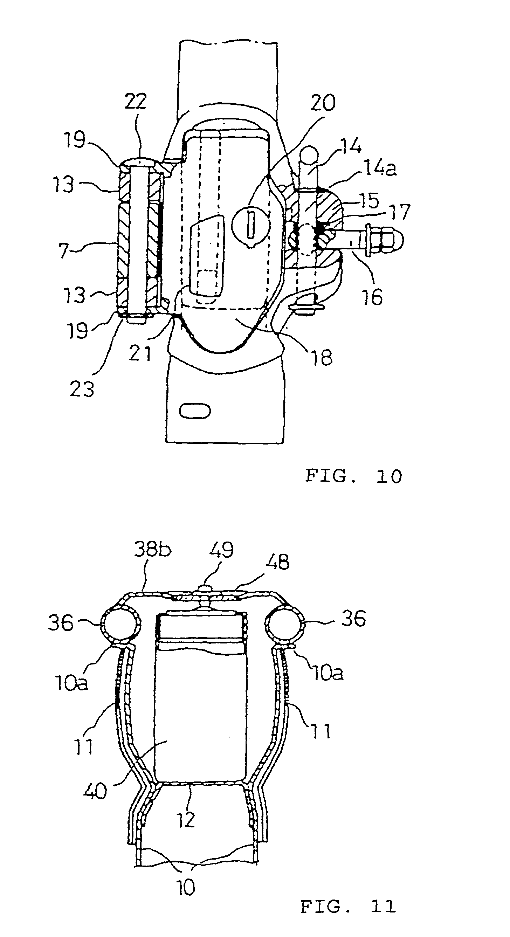

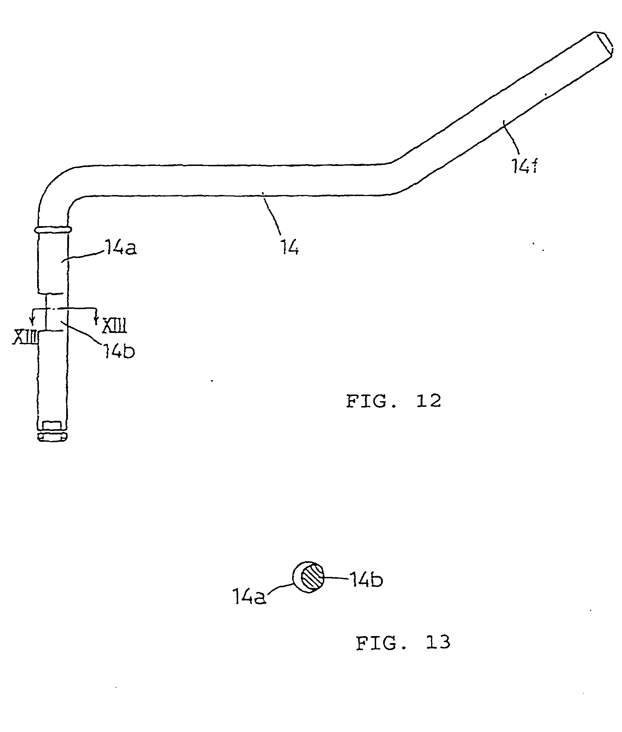

Further, as illustrated by Fig. 12, an eccentric portion 14b is formed at a center of the base 14a of the wedged lever 14 in the longitudinal direction, a hole 16b having a diameter slightly larger than a diameter of the base 14a of the wedged lever 14 is formed at a base 16a of a coupling bolt 16, the hole 16b of the coupling bolt 16 is fitted to the eccentric portion 14b of the wedged lever 14, as shown by Fig. 5 and Fig. 10, a return coil spring 17 is fittedly mounted to the base 14a of the wedged lever 14, both ends of the return coil spring 17 is stopped by the lever pivot supporting portion 15a and the coupling bolt 16, and the coupling bolt 16 is always urged to direct in the forward direction (clockwise direction in Fig. 5 through Fig.7) by the spring force of the return spring 17.

Further, as illustrated by Fig. 5, the lever pivot supporting portion 15 is formed with an inner space 15a where the base 16a of the coupling bolt 16 can fittedly be mounted and a notch 15b by which the coupling bolt 16 can pivotably moved between the front side and the left side of the body, double nuts 16d and 16e are screwed to a front end screw portion 16c of the coupling bolt 16 and the both double nuts 16d and 16e can be fixed to required portions by screwing the both double nuts 16d and 16e in directions for pushing them together after having been adjusted to move the double nuts 16d and 16e to the required portions of the front end screw portion 16c of the coupling bolt 16.

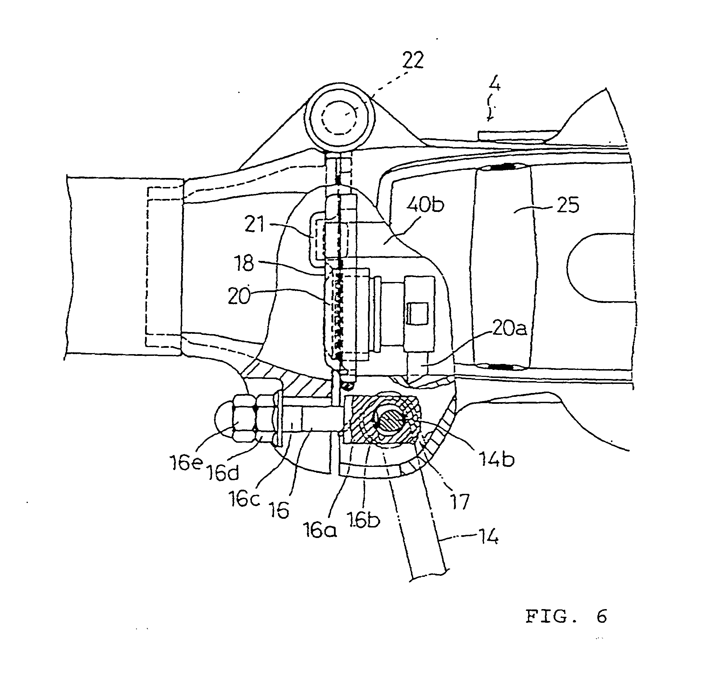

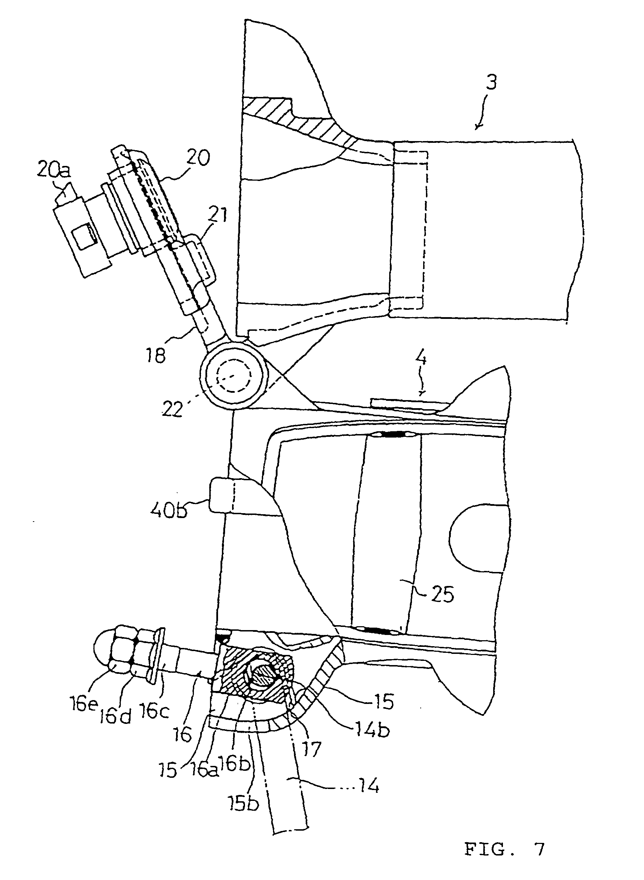

Further, as illustrated by Fig. 12 and Fig.13, the center of the eccentricity of the eccentric porion 14b of the wedged lever 14 is made eccentric in a direction toward an operating portion 14f of the wedged lever 14, as illustrated by Fig. 5, in a state where the operating portion 14f is directed in the rear direction of the body, the eccentric portion 14b of the wedged lever 14 is disposed on the rear side, the coupling bolt 16 is drawn rearwardly, as illustrated by Fig. 6 and Fig. 7, in a state where the operating portion 14f is directed sideways, the eccentric portion 14b of the wedged lever 14 is rotated forwardly with the base 14a of the wedged lever 14 as a center and the coupling bolt 16 is moved forwardly.

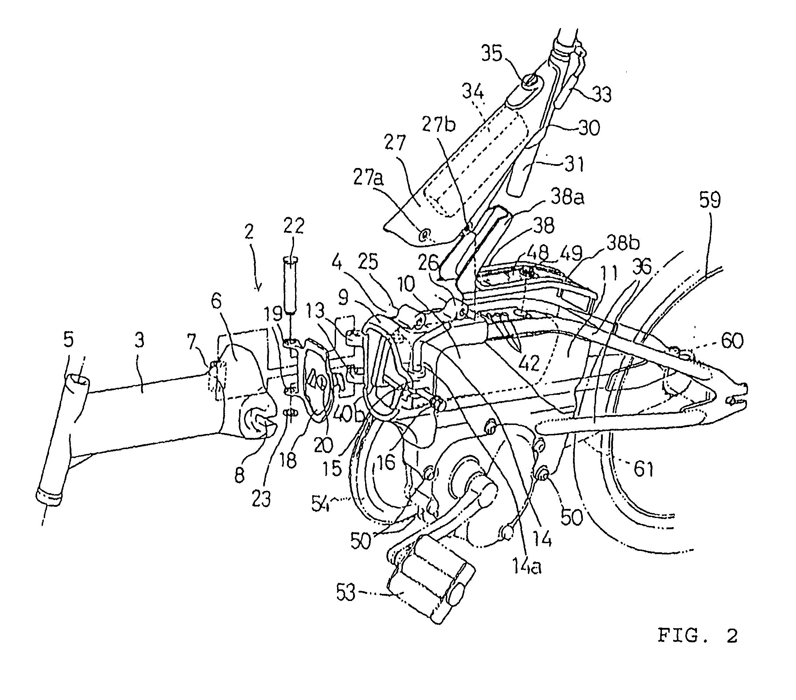

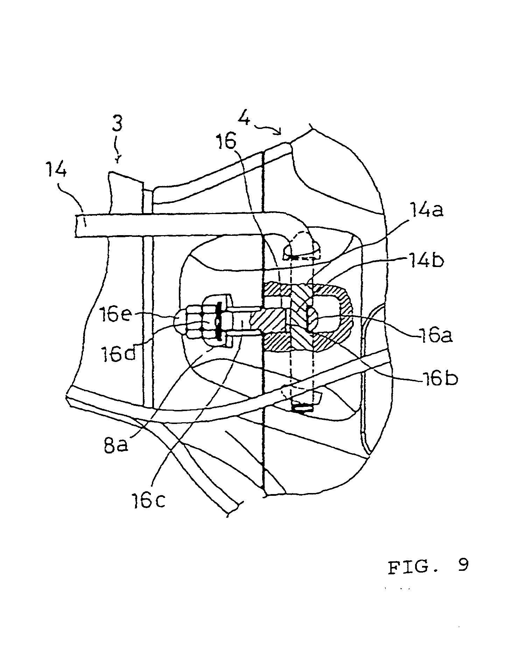

Further, a lid 18 is interposed between the coupling flange 6 of the front frame 3 and the connecting piece 9 of the rear frame 4, as illustrated by Fig. 2, upper and lower hinges 19 are integrally formed on the right side of the lid 18 in respect of the body to sandwich the upper and the lower hinges 13 of the connecting piece 9 from above and from below, a lock 20 is installed on the left side of the lid 18 in respect of the body, a recess 21 is formed on the right side of the rear face of the lid 18 in respect of the body, as illustrated by Fig. 9, a pivoting shaft 22 is penetrated from above to below at the upper and the lower hinges 19 of the lid 18, the upper and the lower hinges 13 of the rear frame 4 and the hinge center 7 of the front frame 3 and a circlip 23 is engaged with a groove in the peripheral direction at the lower end of the pivoting shaft 22.

Further, after inserting a key 24 engageably and disengageably inserted into a key switch 35, mentioned later, into the lock 20, when the key 24 is pivoted in one direction, as illustrated by Fig. 5, a stopper piece 20a of the lock 20 can be stopped by a stepped portion 9a of the connecting piece 9.

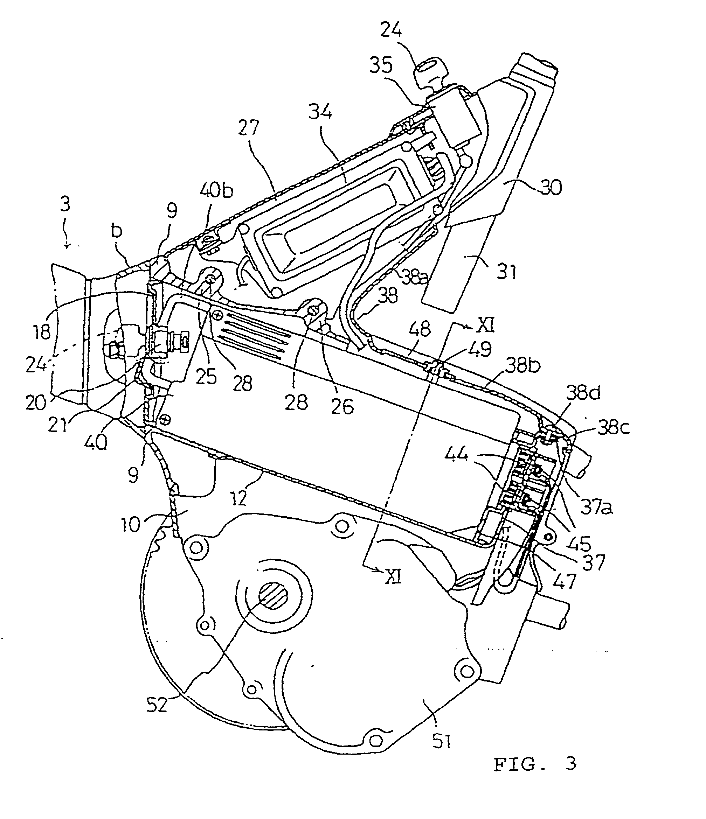

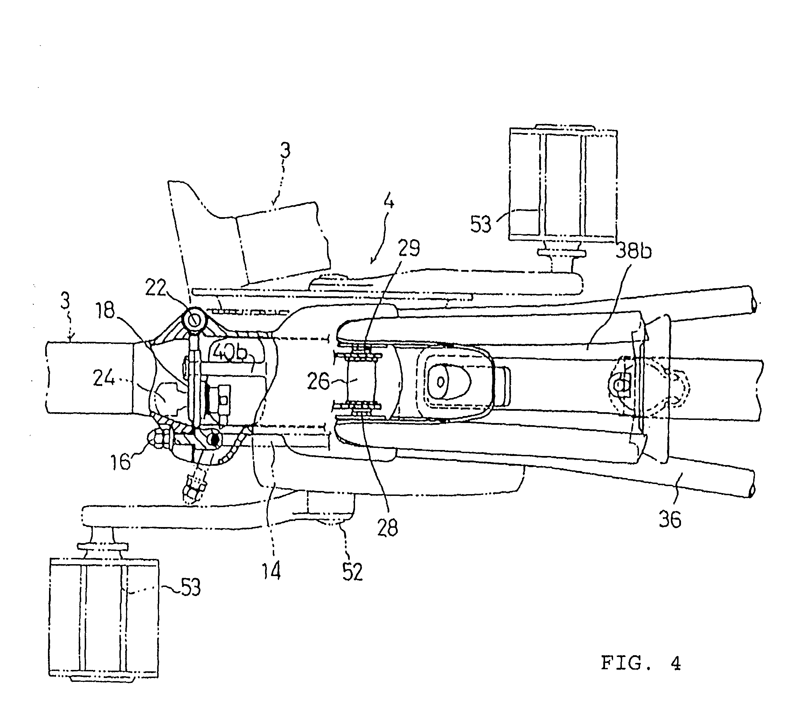

Further, as illustrated by Fig. 3, seat stay attaching sleeves 25 and 26 are formed integrally with a front side and a rear side of a top portion of the connecting piece 9 of the rear frame 4, bolts 28 are penetrated through the seat stay attaching sleeves 25 and 26 and lower end attaching holes 27a and 27b of a hollow seat stay 27 made by sheet drawing, nuts 29 are fastened to front ends of the bolts 28 (refer to Fig. 4), a seat post 31 is fitted to a seat tube 30 installed to the upper end of the hollow seat stay 27 slidably in the up and down direction, a saddle 32 is installed at the upper end of the seat post 31, and the seat post 31 is integrally fixed to the seat tube 30 by a fastening handle 33.

Further, a control unit 34 is installed in the hollow seat stay 27 and the key switch 35 is installed at the upper front face of the hollow seat stay 27.

Further, front end portions of rear forks 36 are integrally bonded by welding to both rear side portions of the connecting piece 9 and rear lower portions of the side plates 10 of the rear frame 4 and as illustrated by Fig.11, rear upper portions of the side plates 10 are folded to outer sides and are brought into contact with lower faces of upper pieces 36a of the rear forks 36 and both are bonded together integrally by welding and as shown by Fig. 3, a rear plate 37 directed upwardly is integrally installed to the rear end of the bottom plate 12.

Further, a cover unit 38 is installed to a rear opening portion of the hollow seat stay 27 and the upper pieces 36a of the rear forks 36 above the side plates 10, the rear opening portion of the hollow seat stay 27 is hermetically sealed by an upper half 38a of the cover unit 38, an upper opening portion of a battery storing portion 39 constituted by the connecting piece 9, the side plates 10, the bottom plate 12 and the rear plate 37 in the rear frame 4, are hermetically sealed by a lower half 38b of the cover unit 38 and as illustrated by Fig. 3, a rear end portion 38c of the lower half 38b of the cover unit 38 and an upper end portion 37a of the rear plate 37 are coupled integrally with each other by screws 38d.

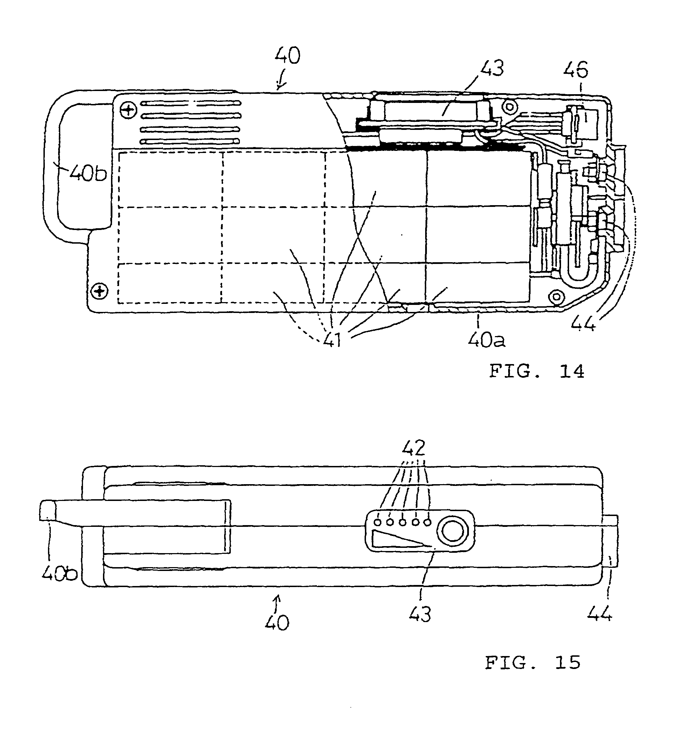

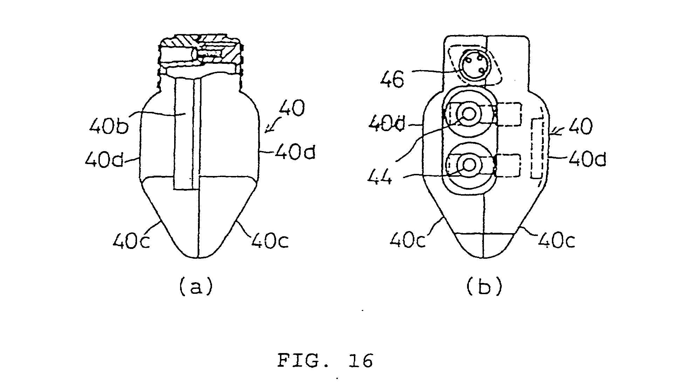

Further, as illustrated by Fig. 14, side faces of a battery unit case 40 fittedly mounted attachably and detachably from a front opening of the battery storing portion 39 are formed substantially in a rectangular shape and as illustrated by Fig. 16, an end face thereof is formed in a irregular pentagonal shape where the lower portion is converged, the central portion is constituted by parallel lines having a wide width, the upper portion is constituted by parallel lines having a narrow width and the upper end portion is constituted by a straight line, a battery storing portion 40a of the battery unit case 40 is divided in four in the longitudinal direction, and a total of 5 x 4 = 20 pieces of Nickel Cadmium batteries 41 are incorporated by overlapping one of them at the bottom portion and two of them thereabove doubly at each of the divided sections.

Further, a grip 40b is formed at the front end of the battery unit case 40, a remaining charge amount display meter 43 having a plurality of pieces of LEDs 42, is installed at the rear upper portion of the battery unit case 40, connection terminals 44 and charge terminals 46 (refer to Fig. 14) are installed at the rear end of the battery unit case 40 and the connection terminals 44 are brought into contact attachably and detachably with connection terminals 45 installed at the rear plate 37.

Further, a transparent plate 48 made of plastics is fitted to the lower half 38b of the cover unit 38 disposed above the remaining charge amount display meter 43, a push button 49 is installed at the transparent plate 48 and when the push button 49 is pushed, the remaining charge amount display meter 43 is operated and a remaining charge amount is displayed by a number of LEDs 42 which are switched on.

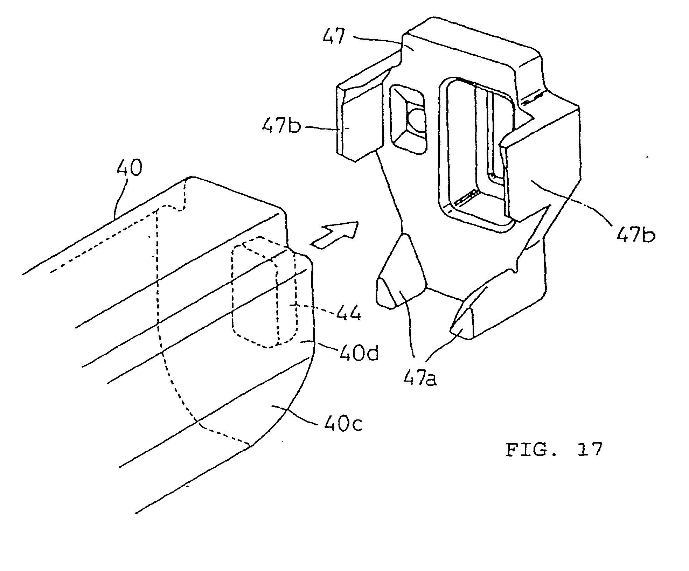

Further, as illustrated by Fig. 17, a battery holding member 47 is arranged at a rear end of the battery storing portion 39, projected pieces 47a and 47b which are respectively brought into contact with lower taper faces 40c and central parallel faces 40d of the battery unit case 40, are formed and the rear end of the battery unit case 40 is stably held by sandwiching the lower taper faces 40c and the central parallel faces 40d of the battery unit case 40 by the projected pieces 47a and 47b of the battery holding member 47.

Further, bolts 50 are respectively penetrated through a plurality of holes at the lower portions of the left and the right side plates 10, the bolts 50 are screwed to fasten to a motor unit 51, the motor unit 51 incorporates an electrically driven motor, not illustrated, and a power transmission system (not illustrated) transmitting power of the electrically driven motor to a crank shaft 52, crank pedals 53 and a drive sprocket 54 are directly connected to the crank shaft 52 and the drive sprocket 54 is driven to rotate manually or by assistance of power of the electrically driven motor.

Further, a steering shaft 55 is fittedly installed to the head pipe 5 pivotably in left and right directions, a bar handle 56 is integrally coupled to the upper end of the steering shaft 55, a front fork 57 is integrally coupled to the lower end of the steering shaft 55 and a front wheel 58 is rotatably attached pivotably to the lower end of the front fork 57.

Further, a rear wheel 59 is rotatably attached pivotably to the rear ends of the rear forks 36 and an endless chain 61 is made to span a driven sprocket 60 integral with the rear wheel 59 and the drive sprocket 54.

Further, the motor unit 51 is attached with a stand 62 risably and fallably and the stand 62 is of a self-supported type having ground portions on the left and on the right.

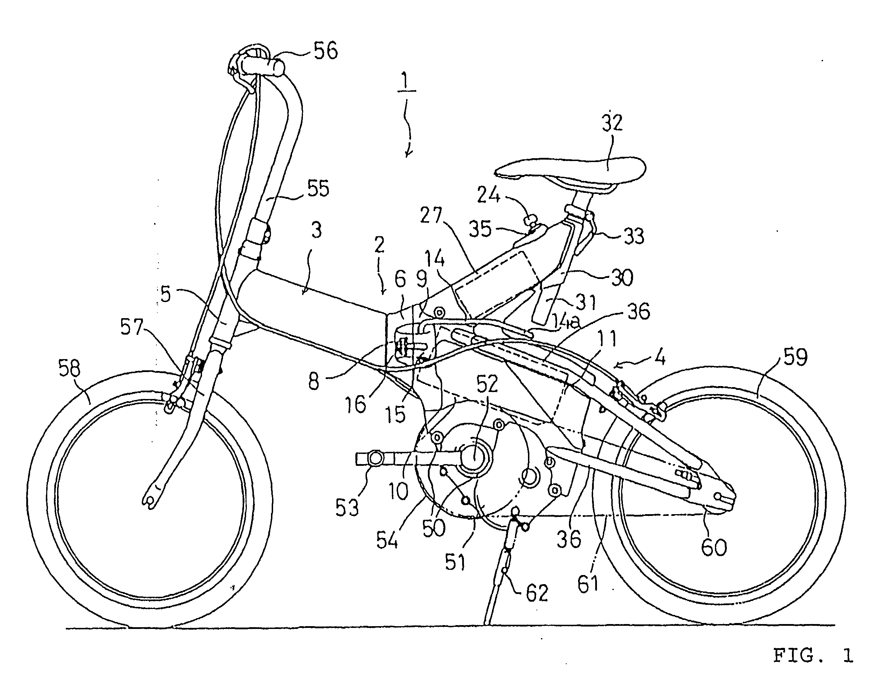

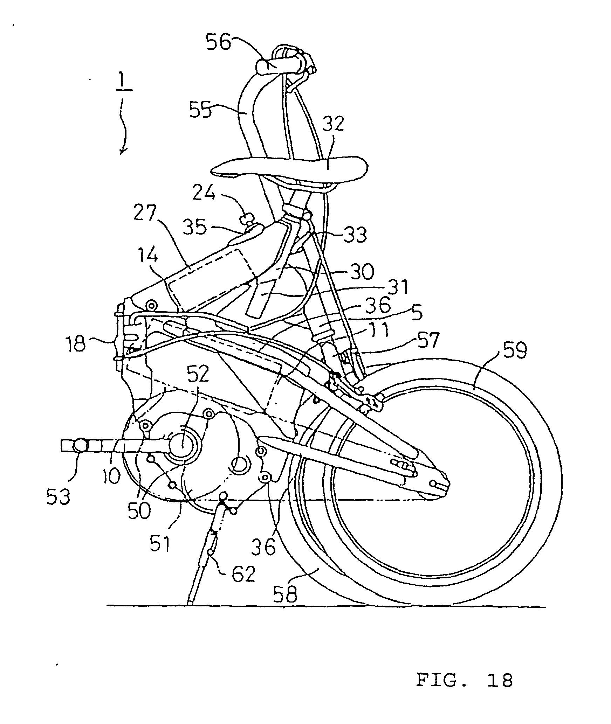

The illustrated embodiment is constituted as mentioned above and therefore, when the stand 62 is erected, the motor-assisted bicycle 1 can stand self-supportedly even in a state (Fig. 1) where the motor-assisted bicycle 1 is assembled by integrally coupling mutually the front frame 3 and the rear frame 4 by extending the front frame 3 in the forward direction or in a state (Fig. 18) where the front frame 3 is folded with the pivoting shaft 22 as a center.

Further, in a state where the front frame 3 is folded rearwardly and the lid 18 is opened, the battery unit case 40 can be mounted into the battery storing portion 39 by grasping the front end grip 40b of the battery unit case 40 or the battery unit case 40 in the battery storing portion 39 can be taken out forwardly.

Further, in a state where the battery unit case 40 is mounted into the battery storing portion 39, the rear end of the battery unit case 40 is held stably by the battery holding member 47, the connection terminals 44 at the rear end of the battery unit case 40 are connected to the connecting terminals 45 of the rear plate 37, the Nickel Cadmium batteries 41 are electrically connected to the control unit 34 and the motor unit 51.

Further, in a state where the battery unit case 40 is taken out from the battery storing unit portion 39, when the charge terminals 46 are connected to power source, not illustrated, the Nickel Cadmium batteries in the battery unit case 40 can be charged.

Further, when the lid 18 is closed, the key 24 is inserted into the lock 20, and the lock 20 is locked, the battery unit case 40 is hermetically sealed in the battery storing unit 39, dust and dirt is prevented from invading the battering storing portion 39, robbery of the battery unit case 40 is prevented beforehand and even when the front portion of the motor-assisted bicycle 1 is inclined downwardly, the battery unit case 40 is not slipped off the battery storing portion 39.

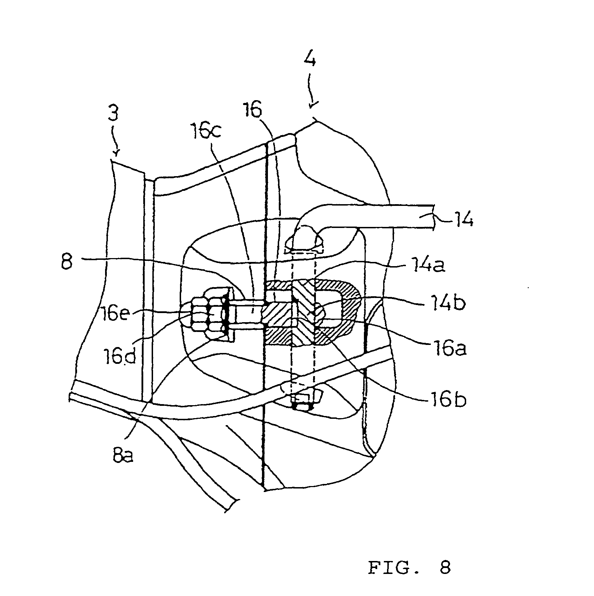

Further, in a state where the lid 18 is closed, the lock 20 is locked by inserting the key 24, thereafter, the front frame 3 is pivoted forwardly with the pivoting shaft 22 as a center, the coupling flange 6 of the front frame 3 is brought into contact with the connecting piece 9 of the rear frame 4 and the wedged lever 14 is directed forwardly, as illustrated by Fig. 8, the notched portion of the eccentric portion 14b of the wedged lever 14 is disposed rearwardly in respect of the body and accordingly, the coupling bolt 16 can be moved forwardly in respect of the body, a gap is produced between the front end nut portion 16b of the coupling bolt 16 and a front end face 8a of the coupling bolt engaging notch 8 of the coupling flange 6 in the front frame 3, the coupling bolt 16 is pivoted with the eccentric portion 14b of the wedged lever 14 as a center and the front end nut portion 16b of the coupling bolt 16 can be attached to and detached from the coupling bolt engaging notch 8 of the coupling flange 6.

Further, when the wedged lever 14 id pivoted rearwardly after engaging the front end nut 16b of the coupling bolt 16 with the coupling bolt engaging notch 8 of the coupling flange 6, the notched portion of the eccentric portion 14b of the wedged lever 14 is disposed forwardly in respect of the body, the coupling bolt 16 is drawn rearwardly in respect of the body by movement of the eccentric portion 14b, the front end nut 16b of the coupling bolt 16 is strongly pushed to the front end face 8a of the coupling bolt engaging notch 8 of the connecting flange 6 and the front end frame 3 is coupled integrally and solidly with the rear frame 4.

Further, the rear frame 4 is formed with the hollow battery storing portion 39 and therefore, a portion for storing the battery is required to form only at the main frame 2, the motor-assisted bicycle 1 is small-sized and light-weighted and is constituted in a smart shape.

Further, the front frame 3 can be coupled with the rear frame 4 or the front frame 3 and the rear frame 4 can be separated from each other only by pivoting the wedged lever 14 and pivoting the coupling bolt 16 and accordingly, folding and assembling of the motor assisted bicycle 1 can easily be carried out in a short period of time.

Further, the front frame 3 and the lid 18 can be pivotably supported in respect of the rear frame 4 by a single piece of the pivoting shaft 22 and accordingly, the structure of folding the main frame 2 and the structure of opening and closing the lid 18 can be simplified, the number of parts can be reduced and the cost can be reduced.

Further, when the front frame 3 is folded rearwardly, the endless chain 61 which is made to span the drive sprocket 54 and the driven sprocket 60, is protected by being sandwiched between the front frame 3 and the rear frame 4 and the endless chain 61 is not exposed to the outside and accordingly, the surrounding is not contaminated by grease adhered to the endless chain 61.

Further, when the push button 49 is pushed, the remaining charge amount display meter 43 is operated and charged state of the Nickel Cadmium batteries 41 can easily be known by the number of LEDs 42 which are switched on.

The invention provides a device for storing a battery for power source of a motor in a motor-assisted bicycle utilizing power of the motor in assisting manual running.

A main frame 2 is constituted foldably by a front frame 3 and a rear frame 4, a battery 41 is stored from an opening of the rear frame 4, a lockable lid 18 is installed at an opening of the rear frame 4 and the lid 18 is pivotably supported foldably and coaxially with a folding shaft of the main frame 2.

## Claims

1. A motor-assisted bicycle comprising a foldable frame (2), a battery (41) as an energy source for the motor of the bicycle and a battery storing device for the battery, wherein an opening of the frame (2) is opened by folding the frame (2) and is closed by unfolding the frame (2), **characterized in that** the battery storing device consists of a space within the frame (2) said space being accessible through the opening.

2. The motor-assisted bicycle according to claim 1, wherein a lockable lid (18) is installed at the opening of the frame (2).

3. The motor-assisted bicycle according to claim 2, wherein the lid (18) is pivotably supported foldably and coaxially with a folding shaft (22) of the frame (2).

4. The motor-assisted bicycle according to any one of claim 1 through claim 3, wherein the pivotably supporting portion (4) of the frame (2) is arranged on a side of a chain (61).

5. The motor-assisted bicycle according to any one of claim 1 through claim 4, wherein a stand (62) is installed below a power unit (51) on a rear side of the folding shaft (22) of the frame (2).

## Patentansprüche

1. Motorunterstütztes Fahrrad, umfassend einen zusammenfaltbaren Rahmen (2) und eine Batterie (41) als Energiequelle für den Motor des Fahrrads und eine Batteriespeichereinrichtung für die Batterie, wobei eine Öffnung des Rahmens (2) durch Zusammenfalten des Rahmens (2) geöffnet wird und durch Auseinanderfalten des Rahmens (2) geschlossen wird,
**dadurch gekennzeichnet, dass** die Batteriespeichereinrichtung aus einem Raum innerhalb des Rahmens (2) besteht, wobei der Raum durch die Öffnung zugänglich ist.

2. Motorunterstütztes Fahrrad nach Anspruch 1, wobei ein verriegelbarer Deckel (18) an der Öffnung des Rahmens (2) angebracht ist.

3. Motorunterstütztes Fahrrad nach Anspruch 2, wobei der Deckel (18) zusammenfaltbar und koaxial mit einer Zusammenfaltungswelle (22) des Rahmens (2) schwenkbar gelagert ist.

4. Motorunterstütztes Fahrrad nach einem der Ansprüche 1 bis 3, wobei der schwenkbare Lagerungsabschnitt (4) des Rahmens (2) an einer Seite einer Kette (61) angeordnet ist.

5. Motorunterstütztes Fahrrad nach einem der Anprüche 1 bis 4, wobei ein Ständer (62) unterhalb einer Antriebseinheit (51) an einer Rückseite der Zusammenfaltungswelle (22) des Rahmens (2) angeordnet ist.

## Revendications

1. Bicyclette à assistance motorisée comprenant un cadre repliable (2), une batterie (41) servant de source d'énergie au moteur de la bicyclette, et un dispositif de stockage de batterie destiné à la batterie,
dans laquelle une ouverture du cadre (2) est ouverte par le repli du cadre (2) et est fermée par le dépliage du cadre (2),
**caractérisée en ce que** le dispositif de stockage de batterie se compose d'un espace aménagé à l'intérieur du cadre (2), ledit espace étant accessible au travers de l'ouverture.

2. Bicyclette à assistance motorisée selon la revendication 1, dans laquelle un couvercle pouvant être verrouillé (18) est monté sur l'ouverture du cadre (2).

3. Bicyclette à assistance motorisée selon la revendication 2, dans laquelle le couvercle (18) est supporté en pivotement de manière repliable et coaxiale au moyen d'un axe de repli (22) du cadre (2).

4. Bicyclette à assistance motorisée selon l'une quelconque des revendications 1 à 3, dans laquelle la partie de support en pivotement (4) du cadre (2) est disposée sur un côté d'une chaîne (61).

5. Bicyclette à assistance motorisée selon l'une quelconque des revendications 1 à 4, dans laquelle une béquille (62) est installée en dessous d'un ensemble propulseur (51) sur un côté arrière de l'axe de repli (22) du cadre (2).
